(19) **Europäisches Patentamt**
**European Patent Office**
**Office européen des brevets**

(11) **EP 2 377 249 B1**

(12) **EUROPEAN PATENT SPECIFICATION**

(45) Date of publication and mention
of the grant of the patent:
**17.10.2012 Bulletin 2012/42**

(21) Application number: **10701671.9**

(22) Date of filing: **27.01.2010**

(51) Int Cl.:
***H04B 1/00*** *(2006.01)*

(86) International application number:
**PCT/EP2010/050944**

(87) International publication number:
**WO 2010/089237 (12.08.2010 Gazette 2010/32)**

(54) **RADIO SIGNAL RECEPTION**

FUNKSIGNALEMPFANG

RÉCEPTION DE SIGNAL RADIO

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **03.02.2009 DE 102009007245**

(43) Date of publication of application:
**19.10.2011 Bulletin 2011/42**

(73) Proprietor: **Innovationszentrum für
Telekommunikationstechnik
GmbH IZT
91058 Erlangen (DE)**

(72) Inventor: **PERTHOLD, Rainer
91085 Weisendorf (DE)**

(74) Representative: **Schenk, Markus et al
Schoppe, Zimmermann, Stöckeler & Zinkler
Patentanwälte
Postfach 246
82043 Pullach bei München (DE)**

(56) References cited:
**WO-A1-01/37265       US-A1- 2004 218 699
US-B1- 7 428 270**

## Description

The present invention relates to a reception system for radio signals and a method of receiving radio signals.

Devices for detecting, analyzing or searching for radio signals usually comprise a sensor capable of already performing first signal processing (receiver), and furthermore often a processing means separate therefrom with second computer-aided signal processing (signal processing device). Between the first signal processing and the second signal processing, there is often a data interface capable of using Ethernet or USB, for example, or a storage process storing detected data from the first signal processing on a data carrier, for example.

The first signal processing in the receiver may, for example, include an A/D conversion (analog/digital conversion), a frequency conversion by means of an NCO (numerically controlled oscillator), a band limitation, a sampling rate converter, as well as a calculation of PSD (power spectral density) spectra, or a complex fast Fourier transform (FFT), if necessary.

The second signal processing may, for example, comprise recording data on a storage medium, further (more narrow-band) filtering and frequency conversion, detection of signals in the spectrum, and demodulation.

The bandwidth with which the recorded radio signal data can be transmitted via the interface and/or stored is limited, of course, namely by the transmission bandwidth, the storage rate and/or, in the case of the transform, the computation power of the signal processings.

A conventional receiver from the prior art, for example, outputs signals via Ethernet either as complex base band (CBB) signals, complex FFT or also as PSD (in decibels). The method used entails a series of disadvantages. Often, one would like to mark, extract and demodulate a signal in the second processing stage, e.g. in a stored spectrogram. The display of the spectrogram usually takes place on the basis of the PSD or FFT data that the receiver outputs. For the extraction of a signal, however, it is required to utilize the CBB data, since one cannot utilize the FFT data as such in direct further processing. A filter in the frequency domain (by means of a fast convolution, for example) only is possible if the bandwidth is not utilized completely. Filtering may here, for example, relate to marking a signal in the time domain (e.g. by means of a window function).

This causes additional effort to be necessary, since both PSD/FFT and CBB data must be transmitted via the interface and stored, for example.

WO 0137265 A1 describes a method of noise suppression to suppress noise in signals containing background noise in a communications path between a cellular communications network and a mobile terminal. In particular, the document is concerned with speech signals and the suppression of noise therein.

US 2004/0218699 A1 is concerned with a wireless receiver which scans, asynchronously and sequentially during a wakeup time, a plurality of predetermined frequencies for the message identifier or specialized preamble.

US 7,428,270 B1 is concerned with the monitoring of radio communication spectrums and suggests forwarding a complex base band signal to a modulation classification section in time domain.

Starting from this prior art, it is the object of the present invention to provide a receiver for radio signals, a reception system and a corresponding method, so that the available bandwidth is utilized in a better way.

This object is achieved by a reception system according to claim 1 and a method of receiving according to claim 10.

The present invention is based on the finding that the reception and/or the extraction of a radio signal is more effective if the first processing stage adds a constant signal or an overlapping portion of a neighboring time frame per time frame, then performs a fast Fourier transform and makes the result available to the second processing stage via the interface and/or an internal storage process. Embodiments of the invention thus also describe a format for forwarding the data between the first and the second signal processing, which reduces the computation effort for the usual steps (e.g. when filtering) of the second signal processing, without significantly increasing the data volume and the computation complexity on the receiver side. The series of supplemental values added to the sampled values may, for example, include a zero supplement (a so-called zero padding) or also an overlap, such as for enabling the overlap-add or overlap-save method. Only after supplementing the series of sample values has taken place will then a Fourier transform or the computation of the PSD spectra be performed.

In contrast thereto, in conventional receivers, both the FFT and the PSD are computed without overlap and/or zero padding. Thus, in the proposed method, an adjustable (or also fixed) number of zeros (i.e. sample values, the level values of which disappear) are inserted (zero padding) in the data stream prior to the calculation of the FFT, in contrast to what has been done previously. Alternatively, the sampled time windows may overlap, which means that an adjustable or also fixed number of sample values occur multiple times in successive segments. For example, they are sampled twice. Following the FFT, now the output data of the FFT computation are transmitted via the interfaces.

According to one embodiment, the reception system uses the so-called fast convolution (the so-called high-speed convolution), in order to be able to calculate such narrow-band channel filters in a clearly more effective manner than in the time domain. As already mentioned, it is advantageous here to calculate the first DFT (discrete Fourier transform) in the receiver itself, for example for an overlap-add method or an overlap-save method.

The signal generated thereby is still suited for displaying the spectrograms, since the inserted zeros (i.e., the zero padding) or the addition of overlap proportions of neighboring time frames only increases the frequency resolution, without otherwise changing the signal.

In particular, narrow-band partial signals may, for example, thus be acquired from the signal with comparably little computation effort with the aid of a variant of the high-speed convolution by multiplying the supplemented FFT data by a suitable filter function and then supplying same to an inverse fast Fourier transform (IFFT). The output signals of the IFFT may then be combined, depending on the supplement variant, i.e. zero padding or overlap proportion addition, by means of the so-called overlap-and-add method or the overlap-and-save method.

The post-processing effort is reduced comparably drastically thereby - particularly because computation power in the second signal processing, which generally is microprocessor-based, is clearly more expensive than in the first signal processing stage, which generally is FPGA-based (FPGA = field programmable gate array).

Preferred embodiments of the present invention will be explained in greater detail in the following with reference to the accompanying drawings, in which:

Fig. 1a is a block diagram of a receiver for a radio signal according to an embodiment of the present invention;

Fig. 1b is a block diagram of a reception system with a receiver according to an embodiment and a post-processing device;

Fig. 2 is a schematic illustration of a circular convolution of two signals;

Fig. 3 is a schematic illustration of a circular convolution of two supplemented signals;

Fig. 4 is a schematic illustration of the overlap-add method; and

Fig. 5 is a schematic illustration of the overlap-save method.

With respect to the following description, it is to be noted that, in the different embodiments, the same or similarly acting functional elements have the same reference numerals, and therefore the descriptions of these functional elements in the various ones of the subsequently illustrated embodiments are mutually interchangeable.

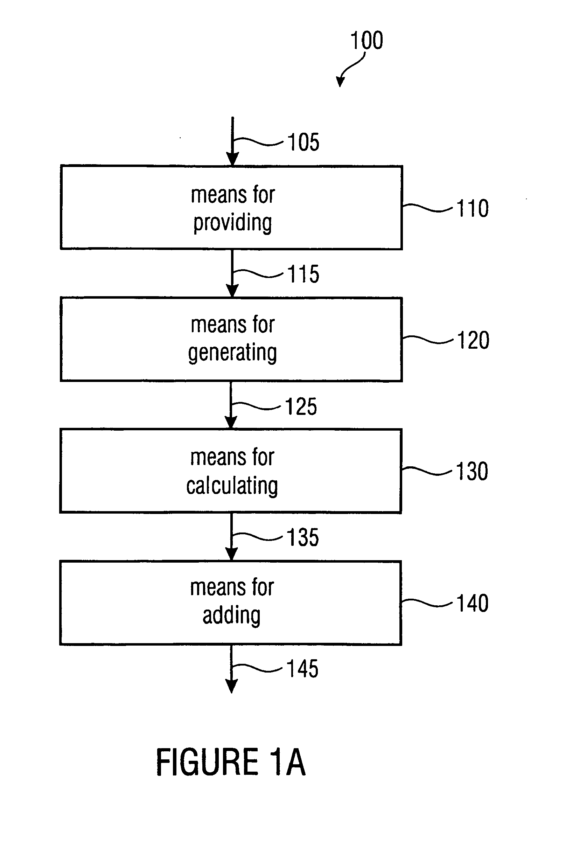

Fig. 1a shows a block diagram of a receiver 100 according to an embodiment of the present invention.

The receiver 100 for a radio signal 105 comprises means for providing 110, means for generating 120, means for calculating 130, and means for adding 140.

The means for providing 110 provides a series of sample values 115 from the radio signal 105. It is in charge of digitizing the analog radio signal, is embodied in hard-wired form, for example, and may include an antenna 300, a terminal 103 for an external antenna 300, an oscillator, a mixer and/or an A/D converter, for example.

The means for providing 110 may, for example, perform the sampling of a continuous radio signal 105, wherein the sampling takes place at a certain sampling rate. The sample values, segmented in time intervals and/or time frames, may later be processed.

The means for generating 120 generates a supplemented sampled signal 125 by extending the series of sample values 115, time frame-wise with a constant signal of supplemental values, such as zeros, or an overlapping portion of a neighboring time frame.

In the first case, extending may be done by adding a number of zero values (a disappearing sample value or level value) to the series of sample values in the respective time frame, either at the front or the back edge of the time frame. For example, the time frames are then arranged in temporally adjoining manner without any overlap.

In the second case, extending may be done by appending a predetermined number of sample values of the series of sample values from the preceding time frame to the front edge of the respective time frame, or a predetermined number of sample values of the series of sample values from the subsequent time frame to the rear edge of the respective time frame. The time frames thus extended then temporally overlap by the predetermined number.

For example, the means for generating 120 operates so that the length of the supplemented and/or extended time frames is a power of two.

The means for calculating 130 calculates a Fourier-transformed sampled signal 135 and, in particular, is formed to perform a fast Fourier transform on the supplemented sample signal 125 time frame by time frame.

The means for adding 140 finally adds the Fourier-transformed sampled signal 135 to a data stream 145, in order to output the data stream via an external interface of the receiver 100 to an external device, or store the data stream in an internal memory of the receiver 100.

Preferably, the means 120, 130 and 140 are hard-wired or implemented in a programmable logic.

The generated data stream 145 thus contains redundant data resulting from the series of supplemental values and capable of being utilized by the second processing stage in an advantageous manner, such as to form the above-described extraction of a signal in the radio signal 105 (e.g. through high-speed convolution), for example. This will be explained in greater detail in the following.

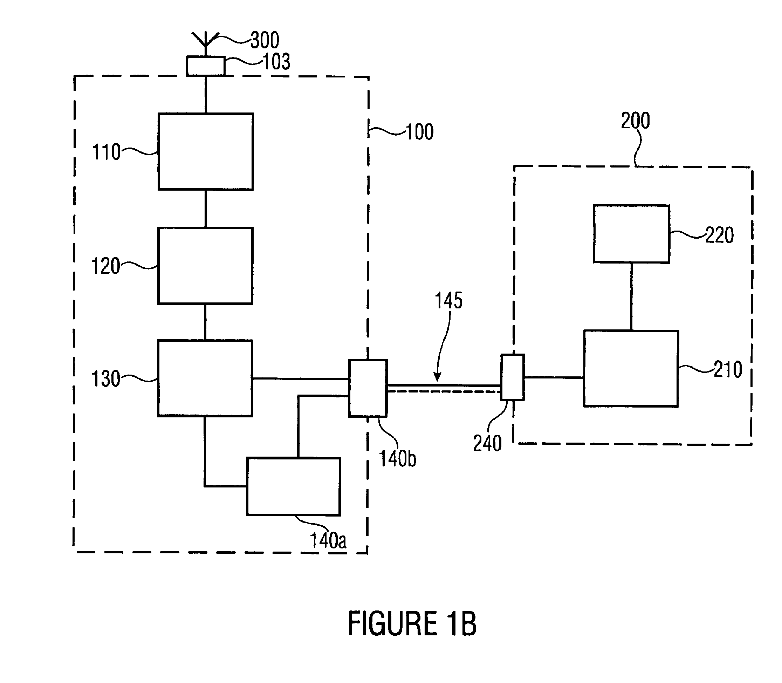

Beforehand, however, a reception system with the receiver 100 from Fig. 1a shall be described on the basis of Fig. 1b. The reception system includes the receiver 100 from Fig. 1a with a reception stage 110 as providing means 110, a series/parallel converter 120 as generating means 120, an FFT module 130 as calculation means 130, an optional memory 140a, and an external interface 140b, to which the FFT module 130 may output the calculated data thereof, and which thus function as adding means 140 by adding the currently obtained data to the previously obtained data.

Via the external interface 140b, which may, for example, include a USB interface or an Ethernet interface, the receiver 100 is coupled to the post-processing device 200. The latter is preferably formed as a programmable processor 210, so as to be able to post-process the transmitted data from the receiver 100 as described subsequently. In particular, it is formed so that it multiplies the transformed (supplemented) time frames in the spectral domain by the transfer function of a filter or the Fourier transform of a sought signal, for example, in order to then subject the result to an IFFT, whereupon the time frames are assembled in the time domain. Details will be described below. Optionally, the post-processing device 200 may also comprise a memory 220 (e.g. a hard disk).

The transmission of the data stream 145 between the receiver 100 and the post-processing device 200 may, for example, take place by means of a cable with plug connections or also in a wireless fashion, for example by means of WLAN.

The discrete Fourier transform (DFT) S[m] of a finite time-discrete series s[k] of the length K generally can be written as

$$S[m] = \sum_{k=0}^{K-1} s[k] W_K^{mk}$$

The inverse DFT is then calculated correspondingly according to

$$s[k] = \frac{1}{K} \sum_{m=0}^{K-1} S[m] W_K^{-mk}$$

wherein $W_x = e^{-j2n/K}$. The lag theorem of the DFT states that a shift in the time domain causes a multiplication of the spectrum of a non-time-shifted series by a linear-phase term, i.e. $s[k-i] \xrightarrow{DFT} W_K^{m \cdot i} S[m]$. However, the shift must be an integer number of samples, i.e. $i \in Z$. A shift of the spectrum by the angular frequency in the time domain also corresponds to a modulation with this frequency, i.e. $W_K^{-k \cdot i} s[k] \xrightarrow{DFT} S[m-l]$.

So as to filter the complex base band signals $s_1[k]$ to $s_L[k]$ each with a low-pass filter with a finite impulse response $h_l[k]$, block-wise high-speed convolution can be used, wherein the signal $s_n[k]$ (n = 1,...,L) to be filtered is divided into segments of the length N each. Each segment can be convoluted with the finite impulse response $h_1[k]$ of the length M, and the filtered segments may then again be patched together in a fitting manner. If a segment of the signal $s_n[k]$ (n = 1,...,L) to be filtered has the length N, and the impulse response $h_1[k]$ has the length M, the linear convolution of these two series has the finite length of (N+M-1). Since the DFT of the convolution of the two series, which is (N+M-1) sample values long, is to describe the DFT of the linear convolution of $s_n[k]$ and $h_1[k]$, the DFT of one segment of the signal $s_n[k]$ (n = 1,...,L) to be filtered and $h_1[k]$ for this length (N+M-1) must be calculated in each case. I.e., both the segments of $s_n[k]$ (n = 1,...,L) and $h_1[k]$ are extended advantageously with a series of zeros. This process generally is referred to as zero supplementation (zero padding).

This problem shall be described in some more detail in the following.

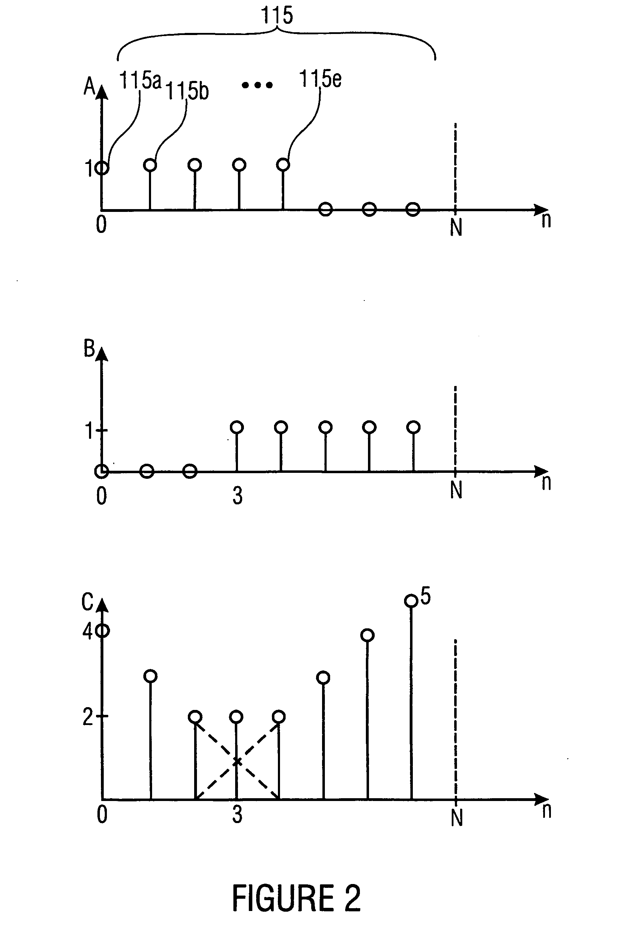

Fig. 2 shows a schematic illustration of a convolution of a first sampled signal A with a second signal B. The first signal A may, for example, include the series of sample values 115, which are illustrated in their temporal sequence in Fig. 2. In the example shown, a time segment comprises N sample values (with n=0,1,2,...,N-1 numbering the discrete time values). A first sample value 115a, a second sample value 115b to a fifth sample value 115e comprise a value A=1. Ensuing, there are three sample values having a value of zero. The example shown relates to the case of eight sample values being taken per time segment. This is merely an example, wherein it is often advantageous that the number of sample values per time segment is a power of 2, i.e. $N = 2^l$ $l=1,2,3,.....$

The second signal B also comprises five non-zero samples, wherein the sample values in the signal B have the value of 1 at the time instants n = 3 through n = 7, and the remaining values are zero. At the bottom of Fig. 2, finally, the result of the convolution C (C = A*B) is shown, which is calculated by:

$$C(n) = \sum_{m=0}^{N-1} B(m) \cdot A(n - m).$$

In the segment-wise execution of the convolution, typically a circular convolution is performed, which means that the sample values represented on the time segment n = 0 to n = N are continued periodically, which is tantamount to the assumption that these sample values are on a circle. As long as the signals within the segment are sufficiently localized, the edges have hardly any or no influence on the result. As shown in Fig. 2, however, the so-called wrap-around effect makes the signals wrap around the circle and corrupt the convolution result. This corruption for the signal C is given by the signal at the location $n = 3$, which is obtained by addition of the two waveforms illustrated in dashed lines. This addition of values due to the "wrap-around of signals" around the circle is undesired and corrupts the result. So as to obtain the artifacts resulting therefrom, the so-called zero padding or zero supplementation is used.

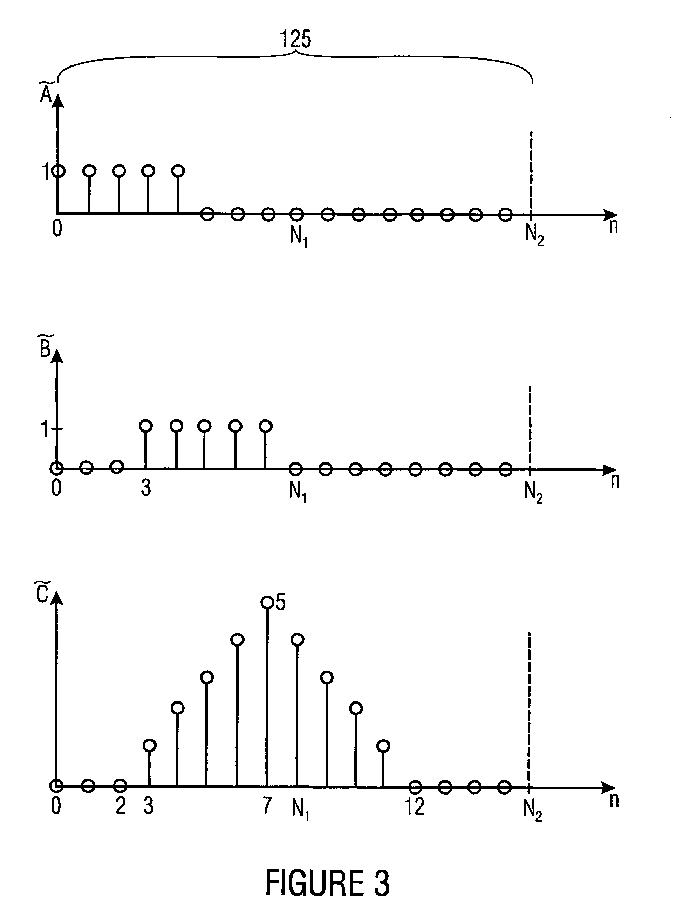

Fig. 3 gives a schematic illustration of a zero padding which does not comprise the described artefact from Fig. 2. In comparison with the sampled signals illustrated in Fig. 2, the number of sample values in Fig. 3 has been increased from $N = N_1$ to $N_2$. The additional sample values (= supplemental value) were then filled up with zeros, so that zero values for the signals A and B were taken between each of the time instants $n = N_1$ and $n = N_2$. The supplemented sampled signals $\tilde{A}$ and $\tilde{B}$ obtained thereby are illustrated in the two upper graphs in Fig. 3. When performing the convolution, with utilizing these supplemented sampled signals, it can be seen that the overlap illustrated in Fig. 2 does not occur, and that the convolution result instead has a maximum of $\tilde{C} = 5$ at the location $n = 7$, and the convoluted signal drops monotonously to both sides, starting from this maximum until reaching zero at $n = 2$ and/or at $n = 12$. In the example shown in Fig. 3, the time segment comprises $N_1 = 8$ time samples, and the supplemented time segment comprises $n_2 = 16$ samples. Like in Fig. 2, it is also assumed in Fig. 3 that the supplemented signals again are periodic in time, which again is tantamount to the sample values lying on a circle.

The illustrated convolution may, for example, be needed if the time signal is to be separated within a certain time window (which is within a time segment, for example). The separation may here take place by means of a window function, which cuts out the time window of interest and sets all other time samples to zero. Following the transform into the frequency domain, the application of the window function corresponds to a convolution, wherein the Fourier transform of the output signal has to be convoluted with the Fourier transform of the window function. If the signal or the filter fills the frequency band completely in the frequency domain, the artefact illustrated in Fig. 2 develops. This is the problem described at the beginning, which was previously solved by the fact that the base band signals have to be transmitted at the same time along with the Fourier-transformed sample values to the second processing stage to extract a time signal. Inserting the zeros thus has the effect of being able to perform the convolution properly in the frequency domain, without producing artifacts.

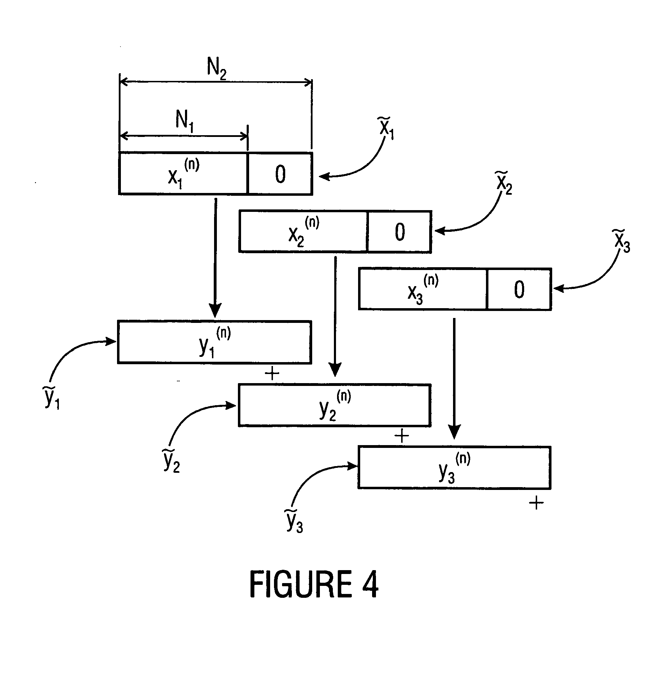

Fig. 4 illustrates the overlap-add method, which is applied, in one embodiment, by the means for generating 120 a supplemented sampled signal 125 (such as shown in Fig. 3). The means for providing 110 provides a series of sample values 115, the series of sample values including time segments (time frames) that, in turn, can be assembled to the complete radio signal 105. The sampled radio signal thus includes the sample values $x(n)$, which are segmented into time segments, and with each of the time segments comprising $N_1$ samples. The segmented sample values $x_k(n)$ ($k = 0, 1, 2, 3, ...$) are treated individually. In embodiments, additional sample values are added to each time segment, so that a given segment does not only include the sample values $x_k(n)$, but furthermore also a number of zeros. Specifically, there may, for example, be $N_1$ sample values $x_k$ in a segment, and the segments are enlarged to a total of $N_2$ sample values by adding additional zeros to the $N_1$ sample values. The inserted or supplemented zero values may, for example, be inserted at the temporally later edge of the segment after the last sample value. Thereby, each of the segments becomes larger, so that the overlap shown in Fig. 4 develops.

Fig. 4 shows a first series of supplemented sample value 125a in a first segment $\tilde{X}_1$, a second series of supplemented sampled signals 125b in a second segment $\tilde{X}_2$, and a third series of supplemented sampled signals 125c in a third segment $\tilde{X}_3$.

The supplemented time segments $\tilde{X}$ each overlap by M sample values having been set to zero. Thus, the zero values do not play any role in the addition of the time segments $\tilde{X}$. However, since the further processing in the signal processing device 200 continuously takes place using the time segments $\tilde{X}$, the zero values are important so as to avoid the edge effect described in Fig. 2. In other embodiments, the zero values cannot be appended at the temporally rear edge, but it is also possible to add the zeros at the temporally earlier edge. Likewise, zeros may also be added at the temporally rear and at the temporally front edge. The effect of the added zeros generally consists in the fact that, in a way, the edges are shifted further away, so that edge effects become avoidable.

For each one of the supplemented time segments $\tilde{X}$, a Fourier transform, or also the PSD spectra, can be calculated now. As a result, one obtains the Fourier-transformed sampled signals, which again are combined in a series of segments. This series of segments forms the data stream 145, which is forwarded to the signal processing device 200 so as to perform filtering there, for example. Following the filtering, the data may again be transformed back into the time domain by an inverse Fourier transform. All of these operations can be performed in a segment-wise manner and the segments $\tilde{Y}_1, \tilde{Y}_2, \tilde{Y}_3, ...$ are obtained as a result. In the discrete Fourier transform, the same predetermined number of Fourier-transformed values is calculated for a predetermined number of sample values, wherein the predetermined number matches in both cases. This leads to the fact that the transformed segments also contain $N_2$ values, wherein the transformed values are calculated from all sample values $\tilde{X}$, so that the Fourier-transformed sampled signals generally do not comprise any zeros. Yet, since the Fourier transform, the filtering, the inverse Fourier transform and the supplementing of the series of sample values represent linear operations, the values in the individual segments $\tilde{Y}$ may also again be added so as to again obtain a time signal.

The multiplicity of the transformed segments may, for example, be transmitted successively (without overlap) and thus form the data format according to an embodiment between the first and the second signal processing.

So as to avoid the negative edge effect illustrated in Fig. 2, it makes sense for the M additional sample values (zero values) to be chosen so as to be sufficiently large, and also for the resulting number $N_2$ of sample values again to represent a power of 2. For example, $N_2$ may represent 4096 sample values, wherein $N_1$ includes only 1024 sample values.

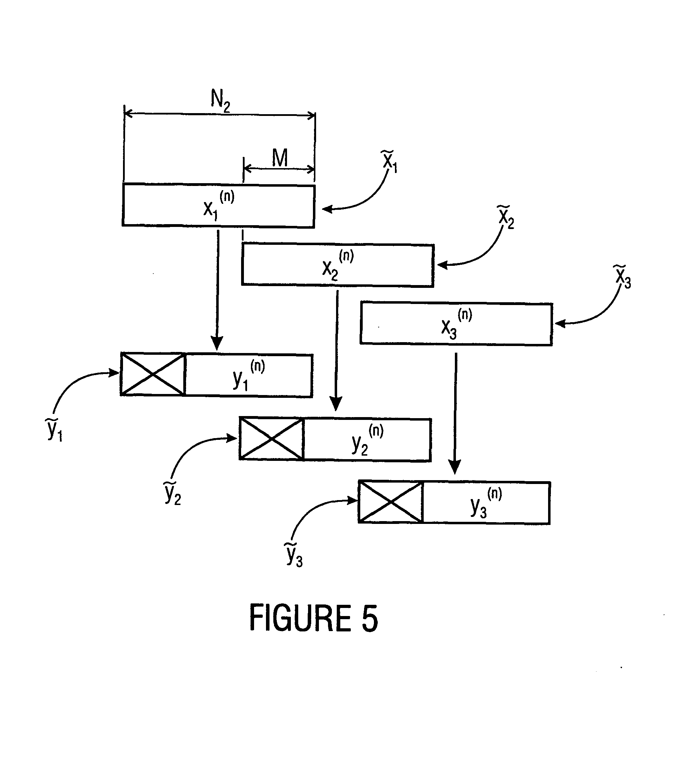

Fig. 5 illustrates the overlap-save method, which is realized by the means 120 for generating a supplemented sampled signal 125, in a further embodiment. Here, again supplemented time segments $\tilde{X}$ are generated, wherein the M additional sample values are not zero values in this embodiment, but correspond to the sampled values of the radio signal 105 at this time instant. This leads to the fact that M sample values are sampled twice. For example, the last M sample values of the radio signal are inserted in the first time segment $\tilde{X}_1$. The same M sample values are also contained in the second time segment $\tilde{X}_2$ as the first M sample values. The supplemented time segments generated thereby may again be supplied to a Fourier transform or a conversion into PSD spectra and then be combined to the data stream 145 and supplied to the signal processing device 200. In the signal processing device 200, for example, filtering may again be performed, which is followed by an inverse Fourier transform. These operations may also be executed in a segment-wise manner like before, with the segments $\tilde{Y}_1, \tilde{Y}_2, \tilde{Y}_3, ...$ developing in the time domain in the end. In the embodiment shown in Fig. 4, the transformed segments or the transformed sample values in the segments could simply be added, which is not possible here because the M sample values have been sampled twice. In order to compensate for this, the first M samples are discarded in the overlap-save method after the filtering.

In both embodiments, as stated, the output data obtained from the discrete Fourier transform can be transmitted to a computer (second processing stage 200), which performs the post-processing via the interface 140b. The post-processing may, for example, here include the multiplication by a filter function H (z), an inverse transform into the time domain, and also the corresponding application of the overlap-add or the overlap-save method.

The data format according to embodiments thus includes output data of the signals $\tilde{X}$ transformed into the frequency domain ($x_{k-1}(n)$ plus supplemental values).

Thus, embodiments also particularly describe a data format for storing digitized radio signals so as to supply same to subsequent post-processing. By adding the additional redundancy (dual sampling or the additional zero values), it is possible to extract signals from the time domain, for example in the frequency domain (e.g. by means of convolution), without requiring additional transmission of the base band signal. Thus, embodiments differ from conventional devices in which I/Q base band data are used for the contents, and spectra (PSD or FFT) are utilized for the visualization and detection of signals. This procedure is common practice with manufacturers, particularly for signal intelligence devices and receivers. Thus, embodiments differ from this conventional approach in that a receiver outputs FFT values after the zero padding and records and/or transmits these values. A receiver 100 for radio signals 105 according to the invention thus offers zero-padded FFT data at its output interface 140b for further processing.

For the case that a comparably narrow-band filter is to be computed, the transfer function H(z) can be chosen so that it has many zeros toward the edges. In this case, a shortened inverse transform can be reckoned with, and hence additional computation effort is saved. For example, if 4096 points are calculated in the Fourier transform in the receiver, only 1024 points have to be calculated in the inverse Fourier transform during the evaluation. Embodiments thus also describe a division of the work between the receiver (zero padding and transform in the frequency domain) and post-processing, which includes weighting with the filter function H(z), inverse transforms into the time domains, as well as overlap-add.

Embodiments may thus be used for radio monitoring (storing and evaluating radio signals, for example), but also for signal intelligence. As already described above, embodiments avoid the disadvantage of conventional methods, wherein filtering in the frequency domain is possible only if the bandwidth is not utilized completely, so that the above-described edge effects are avoided. The discrete Fourier transform used is not linear here (i.e. infinitely long and not periodic), but rather circular. Exemplary values for the number of sample values may be indicated as follows: $N_1$ may include 1024, 2048 or 3072 sample values, for example, and $N_2$ may include 3072, 4096 or 5220 sample values, for example. So as to be able to perform the high-speed convolution, it makes sense here for both, $N_1$ and $N_2$, to be a power of two, and $N_2$ generally should be chosen so as to be sufficiently large, wherein at the same time it is to be noted that $N_2$ being chosen too large clearly increases the amount of data, without offering any additional advantage. Correspondingly, a compromise should be found in order to avoid the described edge effects, on the one hand, and not to let the data stream become too large, on the other hand. The sampling rate may, for example, comprise a value of 30 MHz or range from 10 to 100 MHz. The frequency of the radio signal may, for example, range from 1 to 80 MHz or be smaller than 80 MHz.

In particular, it is pointed out that, depending on the circumstances, the inventive scheme also may be implemented in software. The implementation may take place on a digital storage medium, particularly a disk or CD with electronically readable control signals capable of co-operating with a programmable computer system so that the corresponding method is executed. In general, the invention thus also consists in a computer program product with a program code stored on a machine-readable carrier for performing the inventive method, when the computer program product is executed on a computer. In other words, the invention may thus be realized as a computer program with a program code for performing the method, when the computer program is executed on a computer.

## Claims

1. Reception system, comprising
   a receiver (100) for a radio signal (105), comprising:

   means (110) for providing a series of sample values (115) of a complex base band signal of the radio signal (105), which are subdivided into time frames;
   means (120) for supplementing, per time frame, the sample values of the respective time frame by a constant signal of supplemental values or by an overlapping portion of a neighboring time frame, in order to obtain a supplemented sampled signal (125);
   means (130) for calculating a transformed sampled signal (135) by applying, per time frame, a fast Fourier transform to the supplemented sampled signal (125) or determining a spectral energy distribution of the supplemented sampled signal (125); and
   means (140) for adding the transformed sampled signal (135) to a data stream (145) and outputting the data stream (145) via an external interface to an external device or storing the data stream (145) in an internal memory,

   **characterized in that**
   the means (110) for providing is configured to provide the series of sample values (115) of the complex base band signal of the radio signal (105) at the sampling rate lying within a range from 10 to 100 MHz, the means for supplementing, calculating and adding are hard-wired or implemented in a programmable logic, and the means (110) for providing, the means (120) for supplementing, the means (130) for calculating, and the means (140) for adding and outputting or storing are formed to transmit the data stream (145) in real time; and
   wherein the reception system further comprises a signal processing device (200), which is microprocessor-based and formed to extract the transformed sampled signal from the data stream (145), and multiply the transformed sampled signal in a time-frame-wise manner by a filter transfer function to obtain a filtered transformed signal.

2. Receiver system according to claim 1, wherein the means (120) for supplementing is formed to append a series of zero values before the sample values of the respective time frame as a constant signal, wherein the time frames are temporally adjacent.

3. Receiver system according to claim 1 or claim 2, wherein the means (120) for generating is formed so that the time frames of the sampled signal is $N_1$ sample values long and a length of the time frames of the supplemented sampled signal is $N_2 = M + N_1$ and $N_2$ is a power of 2.

4. Receiver system according to claim 3, wherein both $N_1$ and $N_2$ are a power of 2.

5. Receiver system according to one of the preceding claims, wherein the means (140) for adding and outputting or storing is formed to transmit the data stream (145) to the external device in a cable-bound manner via a cable plug connection of the receiver (100) or in a wireless manner.

6. Receiver system (100) according to claims 1 to 5, wherein the receiver is formed to receive radio signals (105) in a frequency range between 1 MHz and 80 MHz.

7. Reception system according to one of the preceding claims, wherein
   the signal processing device (200) is formed to inversely transform the filtered transformed signal into the time domain to obtain overlapping time frame segments ($\tilde{Y}$), and to assemble the overlapping time frame segments (Y) to a filtered sampled radio signal.

8. Reception system according to claim 7, wherein the means (120) for supplementing, per time frame, the sample values of the respective time frame is formed to do the supplementing by means of a constant signal of supplemental values, and the signal processing device (200) is formed to perform the assembling by an addition of overlapping proportions of overlapping time frame segments ($\tilde{Y}$).

9. Reception system according to claim 7, wherein the means (120) for supplementing, per time frame, the sample values of the respective time frame is formed to do the supplementing by means of an overlapping portion of a neighboring time frame, and the signal processing device (200) is formed to perform the assembling by omitting overlapping portions of the overlapping time frame segments (Ỹ).

10. Method of receiving a radio signal (105), comprising:

providing a series of sample values (115) of a complex base band signal of the radio signal (105) which are subdivided into time frames; supplementing, per time frame, the sample values of the respective time frame by a constant signal of supplemental values or by an overlapping portion of a neighboring time frame, in order to obtain a supplemented sampled signal (125); calculating a transformed sampled signal (135) by applying, per time frame, a fast Fourier transform to the supplemented sampled signal (125) or determining a spectral energy distribution of the supplemented sampled signal (125); and adding the transformed sampled signal (135) to a data stream (145) and outputting the data stream (145) via an external interface to an external device or storing the data stream (145) in an internal memory,
**characterized in that**
the provision of the series of sample values (115) is performed such that the series of sample values (115) of the complex base band signal of the radio signal (105) is provided at a sampling rate lying within a range from 10 to 100 MHz, the supplementing, calculating and adding are performed hard-wired or in a programmable logic, and the providing, supplementing, calculating, adding and outputting or storing are performed in real time, and
the method further comprises extracting the transformed sampled signal from the data stream (145), and multiplying the transformed sampled signal in a time-frame-wise manner by a filter transfer function to obtain a filtered transformed signal, the extraction and multiplication being performed microprocessor-based.

11. Method according to claim 10, wherein the step of supplementing comprises appending a series of zero values before the sample values of the respective time frame as a constant signal, wherein the time frames are temporally adjacent.

12. Method according to claim 10 or claim 11, wherein the adding and outputting or storing comprises transmitting the data stream (145) to an external device on a cable via a cable plug connection of the receiver (100) or wirelessly.

**Patentansprüche**

1. Empfangssystem mit:

einem Empfänger (100) für ein Funksignal (105), mit:

einer Einrichtung zum Bereitstellen (110) einer Folge von Abtastwerten (115) eines komplexen Basisbandsignals des Funksignals (105), die in Zeitrahmen unterteilt sind;
einer Einrichtung zum, pro Zeitrahmen, Ergänzen (120) der Abtastwerte des jeweiligen Zeitrahmens um ein konstantes Signal von Ergänzungswerten oder um einen sich überlappenden Anteil eines benachbarten Zeitrahmens, um ein ergänztes Abtastsignal (125) zu erhalten;
einer Einrichtung zum Berechnen (130) eines transformierten Abtastsignals (135) durch, pro Zeitrahmen, Anwenden einer schnellen FourierTransformation auf das ergänzte Abtastsignal (125) oder Ermitteln einer spektralen Energieverteilung des ergänzten Abtastsignals (125);
einer Einrichtung (140) zum Hinzufügen des transformierten Abtastsignals (135) zu einem Datenstrom (145) und Ausgeben des Datenstroms (145) über eine externe Schnittstelle zu einem externen Gerät oder Speichern des Datenstroms (145) in einem internen Speicher,

**dadurch gekennzeichnet, dass**
die Einrichtung zum Bereitstellen (110) konfiguriert ist, um die Folge von Abtastwerten (115) des komplexen Basisbandsignals des Funksignals (102) mit der Abtastrate bereitzustellen, die in einem Bereich von 10 bis 100 MHz liegt, die Einrichtungen zum Ergänzen, Berechnen und Hinzufügen fest verdrahtet sind oder in einer programmierbaren Logik implementiert sind, und die Einrichtung zum Bereitstellen (110), die Einrichtung zum Ergänzen (120), die Einrichtung zum Berechnen (130) und die Einrichtung zum Hinzufügen (140) und Ausgeben oder Speichern ausgebildet sind, um den Datenstrom (145) in Echtzeit zu übertragen; und
wobei das Empfangssystem ferner eine Signalverarbeitungsvorrichtung (200) aufweist, die mikroprozessorbasiert ist und ausgebildet ist, um aus dem Datenstrom (145) das transformierte Abtastsignal (135) zu extrahieren, und das transformierte Abtastsignal (135) Zeitrahmenweise mit einer Filterübertragungsfunktion zu multiplizieren, um ein gefiltertes transformiertes Signal zu erhalten.

2. Empfangssystem nach Anspruch 1, bei dem die Einrichtung zum Ergänzen (120) ausgebildet ist, um als konstantes Signal eine Folge von Null-Werten vor den Abtastwerten des jeweiligen Zeitrahmens anzufügen, wobei die Zeitrahmen zeitlich aneinandergrenzen.

3. Empfangssystem nach Anspruch 1 oder Anspruch 2, bei dem die Einrichtung zum Erzeugen (120) so ausgebildet ist, dass die Zeitrahmen des Abtastsignals $N_1$ Abtastwerte lang ist und eine Länge der Zeitrahmen des ergänzten Abtastsignals $N_2 = M + N_1$ beträgt und $N_2$ eine Potenz von 2 ist.

4. Empfangssystem nach Anspruch 3, bei dem sowohl $N_1$ als auch $N_2$ eine Potenz von 2 sind.

5. Empfangssystem nach einem der vorhergehenden Ansprüche, bei dem die Einrichtung (140) zum Hinzufügen und Ausgeben oder Speichern ausgebildet ist, um den Datenstrom (145) kabelgebunden über eine Kabelsteckerverbindung des Empfängers (100) oder drahtlos an das externe Gerät zu übertragen.

6. Empfangssystem nach einem der Ansprüche 1 bis 5, der ausgebildet ist, um Funksignale (105) in einem Frequenzbereich zwischen 1 Mhz und 80 Mhz zu empfangen.

7. Empfangssystem nach einem der vorhergehenden Ansprüche, bei dem
   die Signalverarbeitungsvorrichtung (200) ausgebildet ist, um das gefilterte transformierte Signal in den Zeitbereich zurückzutransformieren, um sich überlappende Zeitrahmensegmente ($\tilde{Y}$) zu erhalten, und die sich überlappende Zeitrahmensegmente ($\tilde{Y}$) zu einem gefilterten abgetasteten Funksignal zusammenzufügen.

8. Empfangssystem nach Anspruch 7, bei dem die Einrichtung zum, pro Zeitrahmen, Ergänzen (120) der Abtastwerte des jeweiligen Zeitrahmens ausgebildet ist, um die Ergänzung mittels eines konstanten Signals von Ergänzungswerten vorzunehmen, und die Singalverarbeitungsvorrichtung (200) ausgebildet ist, um das Zusammenfügen durch eine Hinzufügung sich überlappender Anteile der sich überlappenden Zeitrahmensegmente ($\tilde{Y}$) durchzuführen.

9. Empfangsystem nach Anspruch 7, bei dem die Einrichtung zum, pro Zeitrahmen, Ergänzen (120) der Abtastwerte des jeweiligen Zeitrahmens ausgebildet ist, um die Ergänzung mittels eines sich überlappenden Anteils eines benachbarten Zeitrahmens vorzunehmen, und die Singalverarbeitungsvorrichtung (200) ausgebildet ist, um das Zusammenfügen durch eine Weglassung sich überlappender Anteile der sich überlappenden Zeitrahmensegmente ($\tilde{Y}$) durchzuführen.

10. Verfahren zum Empfangen eines Funksignals (105), mit folgenden Schritten:

   Bereitstellen einer Folge von Abtastwerten (115) eines komplexen Basisbandsignals des Funksignals (105), die in Zeitrahmen unterteilt sind;
   Ergänzen, pro Zeitrahmen, der Abtastwerte des jeweiligen Zeitrahmens um ein konstantes Signal von Ergänzungswerten oder um einen sich überlappenden Anteil eines benachbarten Zeitrahmens, um ein ergänztes Abtastsignal (125) zu erhalten;
   Berechnen eines transformierten Abtastsignals (135) durch, pro Zeitrahmen, Anwenden einer schnellen Fourier-Transformation auf das ergänzte Abtastsignal (125) oder Ermitteln einer spektralen Energieverteilung des ergänzten Abtastsignals (125);
   Hinzufügen des transformierten Abtastsignals (135) zu einem Datenstrom (145) und Ausgeben des Datenstroms (145) über eine externe Schnittstelle zu einem externen Gerät oder Speichern des Datenstroms (145) in einem internen Speicher,
   **dadurch gekennzeichnet, dass**
   die Bereitstellung der Folge von Abtastwerten (115) so durchgeführt wird, dass die Folge von Abtastwerten (115) des komplexen Basisbandsignals des Funksignals (105) mit einer Abtastrate bereitgestellt wird, die in einem Bereich von 10 bis 100 MHz liegt,
   das Ergänzen, Berechnen und Hinzufügen festverdrahtet oder in einer programmierbaren Logik durchgeführt werden, und das Bereitstellen, Ergänzen, Berechnen, Hinzufügen und Ausgeben oder Speichern in Echtzeit durchgeführt werden, und
   das Verfahren ferner das Extrahieren des transformierten Abtastsignals (135) aus dem Datenstrom (145) umfasst, und Multiplizieren des transformierten Abtastsignals (135) Zeitrahmen-weise mit einer Filterübertragungsfunktion, um ein gefiltertes transformiertes Signal zu erhalten, wobei die Extraktion und Multiplikation mikroprozessorbasiert durchgeführt werden.

11. Verfahren nach Anspruch 10, bei dem der Schritt des Ergänzens ein Anfügen einer Folge von Null-Werten vor den Abtastwerten des jeweiligen Zeitrahmens als konstantes Signal umfasst, wobei die Zeitrahmen zeitlich aneinandergrenzen.

12. Verfahren nach Anspruch 10 oder Anspruch 11, bei dem das Hinzufügen und Ausgeben oder Speichern ein Übertragen des Datenstroms (145) an ein externes Gerät auf einem Kabel über eine Kabelsteckerverbindung des Empfängers (100) oder drahtlos umfasst.

**Revendications**

**1.** Système de réception, comprenant
un récepteur (100) pour un signal radio (105), comprenant:

un moyen (110) destiné à fournir une série de valeurs d'échantillons (115) d'un signal de bande de base complexe du signal radio (105) qui sont subdivisées en trames temporelles;
un moyen (120) destiné à compléter, par trame temporelle, les valeurs d'échantillons de la trame temporelle respective par un signal constant de valeurs complémentaires ou par une portion en recouvrement d'une trame temporelle voisine, pour obtenir un signal échantillonné complété (125);
un moyen (130) destiné à calculer un signal échantillonné transformé (135) en appliquant, par trame temporelle, une transformée de Fourier rapide au signal échantillonné complété (125), ou à déterminer une distribution d'énergie spectrale du signal échantillonné complété (125); et
un moyen (140) destiné à additionner le signal échantillonné transformé (135) à un flux de données (145) et à sortir le flux de données (145) via une interface externe vers un dispositif externe, ou à mémoriser le flux de données (145) dans une mémoire interne,

**caractérisé par le fait que**
le moyen (110) destiné à fournir est configuré pour fournir la série de valeurs d'échantillons (115) du signal de bande de base complexe du signal radio (105) à la vitesse d'échantillonnage située dans une plage de 10 à 100 MHz, les moyens destinés à compléter, calculer et additionner sont câblés ou mis en oeuvre dans une logique programmable et le moyen (110) destiné à fournir, le moyen (120) destiné à compléter, le moyen (130) destiné à calculer et le moyen (140) destiné à additionner et sortir ou mémoriser sont formés pour transmettre le flux de données (145) en temps réel; et
dans lequel le système de réception comprend par ailleurs un dispositif de traitement de signal (200) qui est à base de microprocesseur et formé pour extraire le signal échantillonné transformé du flux de données (145), et multiplier le signal échantillonné transformé par trame temporelle par une fonction de transfert de filtre, pour obtenir un signal transformé filtré.

**2.** Système de récepteur selon la revendication 1, dans lequel le moyen (120) destiné à compléter est formé pour ajouter une série de valeurs zéro avant les valeurs d'échantillons de la trame temporelle respective comme signal constant, dans lequel les trames temporelles sont adjacentes dans le temps.

**3.** Système de récepteur selon la revendication 1 ou la revendication 2 , dans lequel le moyen (120) destiné à générer est formé de sorte que les trames temporelles du signal échantillonné soient d'une longueur de $N_1$ valeurs d'échantillon et qu'une longueur des trames temporelles du signal échantillonné complété soit de $N_2 = M + N_1$ et $N_2$ est une puissance de 2.

**4.** Système de récepteur selon la revendication 3, dans lequel tant $N_1$ que $N_2$ sont une puissance de 2.

**5.** Système de récepteur selon l'une des revendications précédentes dans lequel le moyen (140) destiné à additionner et sortir ou mémoriser est formé pour transmettre le flux de données (145) au dispositif externe de manière câblée via une connexion à prise de câble du récepteur (100) ou de manière sans fil.

**6.** Système de récepteur (100) selon les revendications 1 à 5, dans lequel le récepteur est formé pour recevoir des signaux radio (105) dans une plage de fréquences comprise entre 1 MHz et 80 MHz.

**7.** Système de réception selon l'une des revendications précédentes, dans lequel
le dispositif de traitement de signal (200) est formé pour transformer inversement le signal transformé filtré au domaine temporel pour obtenir des segments de trame temporelle se recouvrant ($\tilde{Y}$), et pour assembler les segments de trame temporelle se recouvrant ($\tilde{Y}$) pour obtenir un signal radio échantillonné filtré.

**8.** Système de réception selon la revendication 7, dans lequel le moyen (120) destiné à compléter, par trame temporelle, les valeurs d'échantillons de la trame temporelle respective est formé pour réaliser la complétion au moyen d'un signal constant de valeurs complémentaires, et le dispositif de traitement de signal (200) est formé pour réaliser l'assemblage par une addition de parties de recouvrement des segments de trame temporelle se recouvrant ($\tilde{Y}$).

**9.** Système de réception selon la revendication 7, dans lequel le moyen (120) destiné à compléter, par trame temporelle, les valeurs d'échantillons de la trame temporelle respective est formé pour réaliser la complétion au moyen d'une partie de recouvrement d'une trame temporelle voisine et le dispositif de traitement de signal (200) est formé pour réaliser l'assemblage en omettant les parties de recouvrement des segments de trame temporelle se recouvrant ($\tilde{Y}$).

**10.** Procédé pour recevoir un signal radio (105), comprenant:

fournir une série de valeurs d'échantillons (115) d'un signal de bande de base complexe du signal radio (105) qui sont subdivisées en trames temporelles;

compléter, par trame temporelle, les valeurs d'échantillons de la trame temporelle respective par un signal constant de valeurs complémentaires ou par une partie en recouvrement d'une trame temporelle voisine, pour obtenir un signal échantillonné complété (125);

calculer un signal échantillonné transformé (135) en appliquant, par trame temporelle, une transformée de Fourier rapide au signal échantillonné complété (125), ou déterminer une distribution d'énergie spectrale du signal échantillonné complété (125); et

additionner le signal échantillonné transformé (135) à un flux de données (145) et sortir le flux de données (145) via une interface externe vers un dispositif externe ou mémoriser le flux de données (145) dans une mémoire interne,

**caractérisé par le fait que**

la fourniture de la série de valeurs d'échantillons (115) est effectuée de sorte que la série de valeurs de échantillons (115) du signal de bande de base complexe du signal radio (105) soit fournie à une vitesse d'échantillonnage située dans une plage de 10 à 100 MHz,

la complétion, le calcul et l'addition sont effectués de manière câblée ou dans une logique programmable, et la fourniture, la complétion, le calcul, l'addition et la sortie ou la mémorisation sont réalisés en temps réel, et

le procédé comprend par ailleurs le fait d'extraire le signal échantillonné transformé du flux de données (145) et de multiplier le signal échantillonné transformé par trame temporelle par une fonction de transfert de filtre, pour obtenir un signal transformé filtré, l'extraction et la multiplication étant réalisées sur base d'un microprocesseur.

**11.** Procédé selon la revendication 10, dans lequel l'étape de complétion comprend le fait d'ajouter une série de valeurs zéro avant les valeurs d'échantillon de la trame temporelle respective comme signal constant, dans lequel les trames temporelles sont adjacentes dans le temps.

**12.** Procédé selon la revendication 10 ou la revendication 11, dans lequel l'addition et la sortie ou la mémorisation comprend le fait de transmettre le flux de données (145) à un dispositif externe sur un câble via une connexion par prise de câble du récepteur (100) ou sans fil.

100

105

| means for providing | 110 |

115

| means for generating | 120 |

125

| means for calculating | 130 |

135

| means for adding | 140 |

145

# FIGURE 1A

FIGURE 1B

FIGURE 2

FIGURE 3

FIGURE 4

EP 2 377 249 B1

# FIGURE 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0137265 A1
- US 20040218699 A1
- US 7428270 B1